# EUROPEAN PATENT APPLICATION

(11) **EP 4 825 926 A1**
(43) Date of publication of application: **21.10.2026**
(21) Application number: 24904221.9
(22) Date of filing: 10.12.2024
(51) Int. Cl.: C09D 7/61, C09D 7/63, C09D 7/20, C09D 7/40, C09D 133/00, C08K 3/04, C08K 5/5415, C08L 91/06, B05D 7/00, C23C 2/12

(54) **COMPOSITION FOR SURFACE-TREATING PLATED STEEL SHEET FOR HOT-PRESS FORMING, AL-BASED PLATED STEEL SHEET SURFACE-TREATED USING SAME, METHOD FOR MANUFACTURING SAME, AND HOT-PRESS-FORMED MEMBER**

(30) Priority: 15.12.2023 KR 20230183027
(71) Applicant: POSCO Co., Ltd, Gyeongsangbuk-do 37859 (KR)
(72) Inventor: BAEK, Je-Hoon, Gwangyang-si, Jeollanam-do 57807 (KR); LEE, Kang-Min, Gwangyang-si, Jeollanam-do 57807 (KR); PAIK, Doo-Jin, Gwangyang-si, Jeollanam-do 57807 (KR); KIM, Jung-Su, Gwangyang-si, Jeollanam-do 57807 (KR); OH, Ji-Eun, Gwangyang-si, Jeollanam-do 57807 (KR)
(74) Representative: Meissner Bolte Partnerschaft mbB
(86) International application number: PCT/KR2024/020121
(87) International publication number: WO 2025/127656

(57) **Abstract**

The present invention relates to a plated steel sheet for hot-press forming, suitable for automobile materials and, more specifically, to a composition for surface-treating the plated steel sheet for hot-press forming, and a plated steel sheet that is surface-treated using the composition, and a method for manufacturing same. In addition, provided is a hot-press-formed member obtained using the surface-treated plated steel sheet.

## Description

### Technical Field

The present disclosure relates to a plated steel sheet for hot forming as an automobile material, and more particularly, to a composition for surface treatment of a plated steel sheet for hot forming, an aluminum-based plated steel sheet which is surface-treated using the composition, a method for manufacturing the aluminum-based plated steel sheet, and a hot-formed member.

### Background Art

Recently, in order to achieve improved fuel efficiency and in view of CO₂ emission regulations of automobiles, research on vehicle body weight reduction is continuing at automobile manufacturers. As a part thereof, various alloying elements are included during design of steel alloy, so that the strength of a steel material is improved at the same weight. However, when various alloying elements are included in steel as such, problems of poor workability, such as increased hardenability and occurrence of defects such as springback are occurring.

In order to solve the problems, a hot-press forming method has been suggested. The hot-press forming method is a method of forming a low-temperature structure such as martensite in a steel material, by forming a steel material having a certain strength in an austenite single phase region and then rapidly cooling the formed steel material at a low temperature. Since the strength of a product may be dramatically improved by this method, the problem of reducing workability when a member having high strength (ultrahigh strength) is manufactured may be greatly reduced.

Meanwhile, efforts to achieve carbon neutrality are continuing cross-nationally, and a technology capable of reducing an amount of CO₂ produced during hot-press forming is being jointly variously researched by automobile and steel companies.

As a result, the following measures were proposed. From a metallurgical perspective, an Ac3 point temperature is lowered by changing base steel components by adding Mn or the like to allow forming (warm stamping) at a lower temperature than the forming temperature of a conventional material (Patent Document 1). Since the warm stamping does not require quenching, productivity may be secured and the life of a mold may be increased. However, a problem of deteriorated corrosion resistance of a steel sheet due to increased content of Mn, a productivity problem in a continuous casting and hot rolling process during a manufacturing process, and the like remain as those to be solved.

Meanwhile, as another measure, in order to shorten a heating time to a target temperature during heating at a high temperature for hot forming, a technology of coating the surface of a steel sheet with a polymer was proposed (Patent Document 2). When the surface of a steel sheet is coated with a hydrocarbon-based polymer, an effect of increasing a heating rate during hot forming may be obtained. However, when the steel sheet having a coated surface is hot formed, residues may be produced on the surface after forming to cause reduced weldability.

In order to solve the problems, a composition for surface treatment in which a polymer except for Si and carbon are bonded (Patent Document 3) and a polymer coating agent containing no P component (Patent Document 4) were developed. However, a part of the compound containing Si such as a silane coupling agent is an important material which affects adhesion between a metal surface and a polymer coating layer, and it is not preferred to completely remove the compound. In addition, since a P component is a component required to secure corrosion resistance, it needs to be included in a range of not impairing weldability.
(Patent Document 1) Korean Patent Laid-Open Publication No. 10-2020-0051129
(Patent Document 2) Chinese Patent Laid-Open Publication No. 10616418
(Patent Document 3) Korean Patent Laid-Open Publication No. 2016-7026841
(Patent Document 4) Chinese Patent Laid-Open Publication No. 116219271

### Summary of Invention

### Technical Problem

An aspect of the present disclosure is to provide a composition for surface treatment of a plated steel sheet for hot forming which may shorten a heating time during heating at a high temperature for hot forming of the plated steel sheet, in providing a plated steel sheet for hot forming appropriate as an automobile material.

Another aspect of the present disclosure is to provide a surface-treated aluminum-based plated steel sheet which may shorten a heating time during heating at a high temperature by surface treating with the composition for surface treatment, and a method for manufacturing the same.

Still another aspect of the present disclosure is to provide a hot-formed member obtained by hot forming a surface-treated aluminum-based plated steel sheet.

Meanwhile, the technical objects to be achieved in the present disclosure are not limited to the above-mentioned technical objects, and other objects which are not mentioned may be clearly understood by those skilled in the art to which the present invention pertains from the following description.

### Solution to Problem

According to an aspect of the present disclosure, a composition for surface treatment of a plated steel sheet for hot forming in which graphite is dispersed in a polymer binder resin is provided.

In an example embodiment in the present disclosure, the composition may have a weight ratio between the polymer binder resin and the graphite of 1:0.25 or less.

In an example embodiment in the present disclosure, the graphite may have an average particle size of 0.2 to 5.0 µm, and the composition may include carbon (C), hydrogen (H), oxygen (O), nitrogen (N), silicon (Si), and phosphorus (P).

In an example embodiment in the present disclosure, base on 100wt% of the polymer binder resin may include 6 to 20% of the acryl resin, 0.01 to 1.00% of the Teflon-based wax, 0.01 to 0.50% of a silane coupling agent, 0.01 to 2.00% of the phosphoric acid-based corrosion resistance improver, and a residual solvent.

According to another aspect of the present disclosure, a surface-treated aluminum-based plated steel sheet includes: a base steel sheet; an aluminum-based plating layer formed on at least one surface of the base steel sheet; a surface treatment coated film layer formed on the aluminum-based plating layer.

In an example embodiment in the present disclosure, the surface treatment coated film layer may be formed from the composition according to an aspect of the present disclosure.

In an example embodiment in the present disclosure, the surface treatment coated film layer may have a Si content of 8.00 wt% or less (excluding 0%) and a Si deposition amount of 100.00 mg/m² or less. In addition, the surface treatment coated film layer may have a P content of 0.70 wt% or less (excluding 0%) and a P deposition amount of 10.00 mg/m² or less.

In an example embodiment in the present disclosure, the surface treatment coated film layer may have a graphite content of 0.1 to 60.0%.

In an example embodiment in the present disclosure, the surface treatment coated film layer may have a thickness of 1.50 µm or less based on a dry thickness and an emissivity of 0.8 or more.

In an example embodiment in the present disclosure, the aluminum-based plating layer may include, by weight: 0 to 27% of zinc (Zn), 7.0 to 10.0% of silicon (Si), a remaining of Al, and unavoidable impurities.

According to another aspect of the present disclosure, a method for manufacturing a surface-treated aluminum-based plated steel sheet includes: preparing an aluminum-based plated steel sheet in which an aluminum-based plating layer is formed on at least one surface of a base steel sheet; applying a composition for surface treatment on the aluminum-based plating layer; and applying, drying, and curing the composition to form a surface treatment coated film layer.

In an example embodiment in the present disclosure, the composition for surface treatment may be a composition according to an aspect of the present disclosure.

In an example embodiment in the present disclosure, the coating treatment may be performed by any one method selected from the group consisting of bar coating, roll coating, spraying, deposition, spray squeezing, and deposition squeezing.

In an example embodiment in the present disclosure, the drying and curing may be performed in a temperature range of 80 to 150°C based on a peak metal temperature (PMT) of the plated steel sheet.

According to still another aspect of the present disclosure, a hot-formed member includes a coated film layer on a plating layer of a surface-treated aluminum plating layer.

In an example embodiment in the present disclosure, the coated film layer may be formed from a composition according to an aspect of the present disclosure.

### Advantageous Effects of Invention

According to the present disclosure, a steel sheet having improved emissivity, in particular, an aluminum-based plated steel sheet may be provided, in providing a steel sheet appropriate for hot forming. In manufacturing parts and the like using the aluminum-based plated steel sheet having improved emissivity, there are economically and environmentally favorable effects such as reducing a heating time during a high-temperature heating treatment of the steel sheet.

Besides, an effect of providing a composition for surface treatment favorable for obtaining an aluminum-based plated steel sheet having improved emissivity is exhibited by the present disclosure.

### Best Mode for Invention

Hereinafter, preferred example embodiments in the present disclosure will now be described in detail with reference to various examples. However, the example embodiments in the present disclosure may be modified in many different forms, and the scope of the present disclosure is not limited to the example embodiments set forth herein.

The inventors of the present disclosure conducted an in-depth study of a method of satisfying the physical properties required in the automotive field to which a plated steel sheet for hot forming is applied while reducing CO₂ emissions in a manufacturing process, in providing a plated steel sheet for hot forming. In particular, they considered a method of increasing a heating rate during high-temperature heating for forming a plated steel sheet for hot forming.

Thus, a composition appropriate for coating treatment (surface treatment) of a surface of a plating layer of a plated steel sheet for hot forming was intended to be provided. In particular, it was confirmed that a composition capable of promoting a CO₂ reduction effect together with improvement of productivity by reducing a heating time to a target temperature for high-temperature forming while securing corrosion resistance, weldability, and the like which are required as a surface treatment layer of a plated steel sheet for hot forming, thereby completing the present disclosure.

According to the present disclosure as such, a composition for surface treatment of a plated steel sheet for hot forming, and also an aluminum-based plated steel sheet which is surface-treated using the composition and a method for manufacturing the same, and a hot-formed member obtained from the surface-treated aluminum-based plated steel sheet are provided.

Hereinafter, the present disclosure will be described in detail.

The composition for surface treatment of a plated steel sheet for hot forming according to an aspect of the present disclosure includes a polymer binder resin as a main component, together with graphite dispersed in the polymer binder resin.

In an example embodiment in the present disclosure, by including the graphite in addition to the polymer binder as a composition for surface treatment, an emissivity of the plated steel sheet for hot forming which is surface-treated with the composition may be increased. Herein, the emissivity refers to a ratio of energy which is re-emitted by an object after absorving external energy (e.g., heat, light, and the like) or re-radiated when a surface reflection phenomenon occurs. High emissivity may be understood to be improved energy absorption rate. As an example, when the emissivity of the plated steel sheet for hot forming is high, an absorption amount of radiant heat emitted during high-temperature heating in a heating furnace for hot forming of the plated steel sheet is increased. Thus, an effect of shortening a time taken to heat to a target temperature may be obtained.

In an example embodiment in the present disclosure, the graphite contained in the composition may have an average particle size of 0.2 to 5.0 µm. When the average particle size of the graphite is less than 0.2 µm, the content of graphite for being dispersed in the polymer binder resin should be excessively increased, and in this case, the content of other components may be relatively lowered. However, when the average particle size of graphite is more than 5.0 µm, graphite is not sufficiently dispersed in the polymer binder resin and easily settles down, due to its excessively increased particle size.

In an example embodiment in the present disclosure, the composition may have a weight ratio between the polymer binder resin and the graphite of 1:0.25 or less. Herein, the weight ratio refers to a ratio of the part by weight (weight ratio). When the weight ratio of the graphite to the polymer binder resin is more than 0.25, the content of the polymer binder resin as a composition component is lowered to deteriorate the physical properties such as corrosion resistance and weldability of the surface-treated plated steel sheet. Meanwhile, though the lower limit of the weight ratio of the graphite is not particularly limited, it may be a weight ratio of 0.01 or more, considering the effect aspect of improving emissivity by graphite.

Meanwhile, in an example embodiment in the present disclosure, the polymer binder resin composition in which graphite is dispersed may be obtained by adding graphite powder to the polymer binder resin and then stirring, as a non-limiting example.

The composition according to an example embodiment in the present disclosure, which is a polymer composition, may include a polymer binder resin as a main composition, and the polymer binder resin may include various additives and a solvent in the resin component.

As an example, base on 100wt% of the polymer binder resin may include: 6 to 20% of the acryl resin, 0.01 to 1.00% of the Teflon-based wax, 0.01 to 0.50% of the silane coupling agent, 0.01 to 2.00% of the phosphoric acid-based corrosion resistance improver, and a remainder of the solvent, based on a total of 100 wt%.

The acryl resin is a component acting as a binder in the composition and may secure the physical properties such as chemical resistance and alkali resistance of the surface treatment layer by adding a certain amount of the acryl resin. The content of the acryl resin may be included at 6 to 20% based on the total of 100 wt% of the polymer binder resin. When the content of the acryl resin is less than 6%, the viscosity of the composition is lowered, and it may be difficult to adjust the thickness of the surface treatment layer during the surface treatment of the plated steel sheet. However, when the content is more than 20%, the storage stability of the composition in a solution state may be lowered. The type of acryl resin is not particularly limited, and a material commonly used in a steel sheet surface treatment field may be used.

The Teflon-based wax may be added for imparting lubricity to a surface treatment layer. The content of the Teflon-based wax may be 0.01 to 1.00% based on the total of 100 wt% of the polymer binder resin. When the content of the Teflon-based wax is less than 0.01%, the lubricity of the surface treatment layer becomes insufficient, and the surface treatment layer and/or material may be broken during working of the surface-treated plated steel sheet. However, when the content is more than 1.00%, lubricant particles may be excessively distributed in the surface treatment layer to rather deteriorate corrosion resistance. As the Teflon-based wax, a polyethylene-Teflon-based wax or a polyteflon-based wax may be used, without limitation thereto.

The silane coupling agent may be included in order to maintain a strong bond between an organic resin and an inorganic compound contained in the composition and modify the organic resin to derive a coupling binding reaction. The silane coupling agent may be included at 0.01 to 0.50% based on the total of 100 wt% of the polymer binder resin. When the content of the silane coupling agent is less than 0.01%, adhesion of the surface treatment layer formed on the surface of the plating layer of the plated steel sheet may be reduced. However, when the content is more than 0.50%, the effects described above are saturated, and an increase in the manufacturing costs may be rather caused. The silane coupling agent may be one or more selected from the group consisting of vinyltriethoxysilane, 3-glycidoxypropyltrimethoxysilane, 3-glycidoxypropyltriethoxysilane, 3-glycidoxypropylmethyldimethoxysilane, N-2-(aminoethyl)-3-aminopropyltriethoxysilane, 3-aminopropyltrimethoxysilane, 3-aminopropyltriethoxysilane, and 2-perfluorooctylethyltrimethoxysilane.

The phosphoric acid-based corrosion resistance improver may be added in order to impart corrosion resistance to the surface treatment layer. In addition, when the P component remains in a certain amount on the surface of the surface-treated plated steel sheet, an effect of preventing hydrogen occlusion occurring during a later heat treatment process may be obtained. Thus, occurrence of brittleness due to hydrogen and the like may be suppressed. The phosphoric acid-based corrosion resistance improver may be included at 0.01 to 2.00% based on the total of 100 wt% of the polymer binder resin. When the content of the phosphoric acid-based corrosion resistance improver is less than 0.01%, corrosion resistance of the surface treatment layer may be reduced, and the surface-treated plated steel sheet becomes vulnerable to hydrogen embrittlement after the heat treatment. However, when the content is more than 2.00%, the P content in the surface treatment layer becomes excessive, and the weldability of the surface-treated plated steel sheet may be inferior. The phosphoric acid-based corrosion resistance improver may be one or more selected from a phosphate compound group having one or more elements of Zn, Cr, Si, Al, Mo, Mg, and Ca as a counter cation.

The polymer binder resin in the composition according to an example embodiment in the present disclosure may include a solvent as a remainder excluding the components described above. Herein, the solvent may be added for dispersing the components forming the polymer binder resin and preparing a solution composition for surface treatment of the plated steel sheet. The solvent may be a mixed solvent of water and an organic solvent. Herein, the water may be deionized water or distilled water, and the organic solvent may be one or more selected from alcohol, ether, and acetone. As an example, the mixed solvent may be obtained by adding an organic solvent to water at a content of 0.1 to 10.0%, in which the content of the organic solvent refers to a content with respect to the total of 100 wt% of the solvent.

As such, the composition according to an example embodiment in the present disclosure may include carbon (C), hydrogen (H), oxygen (O), nitrogen (N), silicon (Si), and phosphorus (P), by including the polymer binder resin composed of the components described above and graphite. Herein, the carbon (C) may result from graphite and the component of the binder resin, the silicon (Si) may result from the silane coupling agent which is a constituent component of the polymer binder resin, and the phosphorus (P) may result from the phosphoric acid-based corrosion resistance improver. Meanwhile, hydrogen (H) and oxygen (O) in the composition are components which are naturally present in the composition by the components forming the composition described above.

Meanwhile, according to an example embodiment in the present disclosure, the composition formed by including the polymer binder resin and graphite may be used in a surface treatment process of the plated steel sheet for hot forming, and hereinafter, the plated steel sheet surface-treated with the composition according to an example embodiment in the present disclosure will be described in detail.

According to an example embodiment in the present disclosure, the plated steel sheet for surface treatment is a steel sheet subjected to hot forming, for example, a plated steel sheet appropriate for press forming by a die and the like at a high temperature in order to obtain a part having a certain shape, and as an example, may be an aluminum-based plated steel sheet.

The aluminum-based plated steel sheet according to an example embodiment in the present disclosure may include a base steel sheet and an aluminum-based plating layer formed on at least one surface of the base steel sheet.

In an example embodiment in the present disclosure, the base steel sheet may be any material as long as it is a high-strength steel appropriate as an automotive material and is a steel applied to obtaining a plated steel sheet through hot-dip plating. Thus, the alloy composition of the base steel sheet is not particularly limited.

However, as a non-limiting example, the base steel sheet may be a carbon steel containing a certain amount of carbon (C) and may include, for example, by weight: 0.02 to 0.60% of carbon (C), 0.001 to 2.000% of silicon (Si), 0.001 to 1.000% of aluminum (Al), 0.1 to 4.0% of manganese (Mn), 0.05% or less of phosphorus (P), 0.02% or less of sulfur (S), 0.02% or less of nitrogen (N), 0 to 0.1% of titanium (Ti), 0.0001 to 0.0100% of boron (B), 0 to 1.00% of copper (Cu), 0 to 1.00% of molybdenum (Mo), 0 to 1.00% of chromium (Cr), 0 to 1.00% of nickel (Ni), 0 to 1.00% of vanadium (V), 0 to 0.01% of calcium (Ca), 0 to 0.1% of niobium (Nb), 0 to 1.0% of tin (Sn), 0 to 1.0% of tungsten (W), 0 to 1.0% of antimony (Sb), 0 to 1.0% of magnesium (Mg), 0 to 1.0% of cobalt (Co), 0 to 1.0% of arsenic (As), 0 to 1.0% of zirconium (Zr), 0 to 1.0% of bismuth (Bi), 0 to 0.3% of rare earth elements (REM), a remainder of Fe, and unavoidable impurities.

Among the alloy composition described above, C, Mn, and the like are added for securing steel strength, Si may greatly contribute to strength stabilization, and Al has a deoxidation effect. P, S, N, and the like may be elements which are unavoidably introduced in a steel manufacturing process, but the present disclosure is not thereto. In addition to them, considering the target physical properties of the final product, it is evident to a person with ordinary skill in the art to which the present disclosure pertains that Ti, B, Cu, Mo, Cr, Ni, V, Ca, Nb, Sn, W, Sb, Mg, Co, As, Zr, Bi, REM, and the like may be further included in addition to the composition described above.

According to an example embodiment in the present disclosure, an aluminum-based plating layer may be included on at least one surface of the base steel sheet.

In an example embodiment in the present disclosure, the aluminum-based plating layer may be a plating layer containing aluminum (Al) as a main element, and as an example, the aluminum-based plating layer may include, by weight: 0 to 27% of zinc (Zn), 7.0 to 10.0% of silicon (Si), a remainder of aluminum (Al), and unavoidable impurities.

In an example embodiment in the present disclosure, though it will be described in detail later, the aluminum-based plating layer may be formed by dipping the base steel sheet into an aluminum-based hot dip coating bath, and it is well known that the composition of the aluminum-based plating layer is determined by the composition in the aluminum-based hot dip coating bath.

In an example embodiment in the present disclosure, in the alloy composition forming the aluminum-based plating layer, zinc (Zn) is an element favorable for securing corrosion resistance of the plating layer and may obtain a Zn-induced sacrificial mode effect. As an example, when the content of Zn is more than 27%, Zn is diffused into the base steel sheet during hot forming of the base steel sheet having the plating layer formed to cause crack occurrence by LME. Therefore, Zn may be included up to 27%, and it should be noted that even in the case of 0%, there is no problem in securing the physical properties of the aluminum-based plating layer.

In an example embodiment in the present disclosure, in the alloy composition forming the aluminum-based plating layer, silicon (Si) may serve to suppress diffusion of Al present in the plating bath into the base steel sheet during plating of the base steel sheet. As an example, in order to obtain the effects described above, the content of Si may be 7% or more. Meanwhile, when the content is more than 10%, there is a concern that the melting point of the plating bath may rapidly rise, and in this case, an amount of ash produced in the plating bath may rapidly increase.

In an example embodiment in the present disclosure, a surface treatment coated film layer may be included on the aluminum-based plating layer. That is, a coated film layer having a certain thickness may be formed on the aluminum-based plating layer.

As such, the plated steel sheet including the surface treatment coated film layer on the aluminum-based plating layer may have a characteristic of high emissivity with excellent corrosion resistance.

In an example embodiment in the present disclosure, in order to obtain a plated steel sheet having the physical properties described above, the surface treatment coating film layer provided on the aluminum-based plating layer may be formed from the composition for surface treatment of a plated steel sheet for hot forming according to an example embodiment in the present disclosure. That is, the coated film layer formed according to an example embodiment in the present disclosure may provide a plated steel sheet having intended physical properties by being formed from a composition in which graphite having a certain size is dispersed at a certain content in the polymer binder resin.

The surface treatment coated film layer according to an example embodiment in the present disclosure may include 0.1 to 60.0% of graphite, in which the content is based on the total of 100 wt% of a dry coated film layer. When the content of the graphite contained in the coated film layer is less than 0.1%, the emissivity of the surface treatment coated film layer may not be increased. However, when the content is more than 60.0%, weldability may be reduced due to carbon remaining in the coated film, after heating the surface-treated aluminum-based plated steel sheet at a high temperature for hot forming.

In an example embodiment in the present disclosure, the thickness of the surface treatment coated film layer may be 1.50 µm or less based on a dry thickness. When the thickness of the coated film layer is more than 1.50 µm, the coated film layer is formed to be too thickly to deteriorate workability and weldability. The lower limit of the surface treatment coated film layer thickness is not particularly limited, but in terms of imparting the effects by the coated film layer, the thickness may be 0.30 µm or more.

In an example embodiment in the present disclosure, the surface treatment coated film layer may be formed from a composition according to an example embodiment in the present disclosure, and thus, the coated film layer may include carbon (C), hydrogen (H), oxygen (O), nitrogen (N), silicon (Si), and phosphorus (P). Among them, carbon (C) may mainly result from graphite, silicon (Si) may result from a silane coupling agent, and phosphorus (P) may result from a phosphoric acid-based corrosion resistance improver.

In an example embodiment in the present disclosure, Si contained in the coated film layer may be included at 8.00 wt% or less (excluding 0%), and P may be included at 0.70 wt% or less (excluding 0%). The content herein is based on a total of 100 wt% of the dry coated film layer. When the content of Si contained in the coated film layer is more than 8.00%, the content of Si which remains on the surface without being fired in the process of high-temperature heating (heat treatment) for hot forming of the surface-treated plated steel sheet may be excessive. Since Si remaining as such tends to have high electrical resistance, it has a problem of impeding weldability of products (for example, hot-formed members). In addition, when the content of P contained in the coated film layer is more than 0.70%, the amount of P remaining in the coated film layer becomes excessive, so that the weldability of the member obtained by hot forming the surface-treated aluminum-based plated steel sheet may be greatly deteriorated.

Meanwhile, in an example embodiment in the present disclosure, the surface treatment coated film layer containing Si and P as described above may have a Si deposition amount of 100.00 mg/m² or less and a P deposition amount of 10.00 mg/m² or less. That is, the contents of Si and P present per unit area in the surface treatment coated film layer may be controlled as described above. Herein, the deposition amount of each element refers to a value of the relative proportion occupied by each element in the coated film layer.

Even when the contents of Si and P are within limited ranges in the coated film layer obtained by the surface treatment, in the case in which the absolute deposition amounts of Si and P are increased due to the excessive deposition amount of the coated composition, weldability and workability in a subsequent process may be adversely affected. Considering this, in an example embodiment in the present disclosure, the Si deposition amount and the P deposition amount in the coated film layer may be limited as described above.

In an example embodiment in the present disclosure, when the Si deposition amount in the surface treatment coated film layer is more than 100.00 mg/m², Si may remain in an excessive amount on the surface even after high-temperature heating for hot forming of the surface-treated plated steel sheet. In this case, the surface electrical resistance of the hot-formed member is increased, resulting in inhibition of welding current in a welding process or deterioration of weldability by occurrence of spatter. In addition, when the P deposition amount in the surface treatment coated film layer is more than 10.00 mg/m², the weldability of the hot-formed member may also be deteriorated. In particular, since P resulting from a phosphate compound strongly tends to remain in a solid state, when it remains excessively on the surface, it causes an increase in the electrical resistance of the surface like Si.

According to another example embodiment in the present disclosure, the Si deposition amount in the surface treatment coated film layer may be 98.00 mg/m² or less or 95.00 mg/m² or less. According to another example embodiment, the P deposition amount in the surface treatment coated film layer may be 9.00 mg/m² or less or 8.50 mg/m² or less.

Meanwhile, it should be noted that the contents of Si and P contained in the surface treatment coated film layer and the lower limits of the deposition amounts of these elements are not particularly limited, and are naturally determined depending on the contents of the silane coupling agent and the phosphoric acid-based corrosion resistance improver in the composition for forming a coated film layer.

Meanwhile, the contents of Si and P in the surface treatment coated film layer and the deposition amounts of these elements may be measured, using an X-ray fluorescence analysis method, a wet resin coating deposition amount measurement method, a non-destructive coating thickness measurement device, and the like. However, the present disclosure is not limited thereto.

The X-ray fluorescence analysis method is a method capable of obtaining the content of each element qualitatively using an X-ray fluorescence analyzer. As another method, the coated film layer may be dissolved in an acid solution and separated from surface-treated plated steel sheet, and the weight of the separated coating film as such may be measured to obtain a resin coated deposition amount per area. As another method, coated film layer thickness information is secured using a non-destructive coating thickness measurement device (e.g., Betascope^{®}), and then the weighted sum of the densities of the based resin and graphite according to the content ratio was taken, thereby obtaining the density of the coated film layer. Thereafter, the thickness of the coated film layer and the density of the coated film layer are multiplied, the deposition amount per unit area may be calculated. According to the above, the deposition amount of each element may be calculated from the content of each element obtained and the deposition amount of the coated film layer.

Meanwhile, it should be noted that the contents of graphite, Si, and P in the coated film layer are based on the contents in the dry coated film layer.

As such, according to an example embodiment in the present disclosure, the surface treatment coated film layer provided on the surface of the plating layer of the aluminum-based plating layer may improve adhesion and corrosion resistance of the coated film layer by containing certain amounts of Si and P with graphite and may have a characteristic of excellent emissivity. As an example, the surface treatment coated film layer according to an example embodiment in the present disclosure may have an emissivity of 0.8 or more. Herein, the description of the emissivity may be replaced with the above description. Meanwhile, considering that the emissivity of the aluminum-based plated steel sheet is about 0.5, the aluminum-based plated steel sheet having the surface treatment coated film layer according to an example embodiment in the present disclosure has an improved effect of the emissivity of 0.8 or more.

As such, since the aluminum-based plated steel sheet having improved emissivity show a high heat absorption rate in the process of heating at a high temperature for hot forming, a heating time (temperature rise time) to a target temperature may be shortened. Thus, in manufacturing the hot-formed member appropriate as an automotive material, CO₂ emissions may be effectively reduced by using the aluminum-based plated steel sheet according to an example embodiment in the present disclosure, and also an effect of improving productivity may be obtained.

Hereinafter, a method for manufacturing a plated steel sheet according to another aspect of the present disclosure, that is, a surface-treated aluminum-based plated steel sheet will be described. However, the following manufacturing method corresponds to an example for manufacturing a surface-treated aluminum-based plated steel sheet.

In an example embodiment in the present disclosure, the surface-treated aluminum-based plated steel sheet may be manufactured by preparing a plated steel sheet having an aluminum-based plating layer formed on at least one surface of a base steel sheet; applying a composition for surface treatment on the aluminum-based plating layer of the plated steel sheet; and applying the composition and drying and curing the plated steel sheet to form a surface treatment coated film layer.

In an example embodiment in the present disclosure, the base steel sheet for forming the aluminum-based plating layer on at least one surface is a high-strength steel appropriate as an automobile material, and the alloy composition thereof is not particularly limited. In addition, it may be replaced with the description of the base steel sheet mentioned above.

In an example embodiment in the present disclosure, the aluminum-based plating layer may be formed by plating the base steel sheet, and as an example, may be obtained by a process of dipping the base steel sheet in an aluminum-based plating bath containing unavoidable impurities including Si, Zn, and Fe in addition to Al. As a non-limiting example, the aluminum-based plating bath may include 7.0 to 10.0% of silicon (Si), and effects of flowability of melt and suppressing diffusion of Al into the base steel sheet during plating and the like may be obtained by adding the Si. In addition, the aluminum-based plating bath may further include 0 to 27% of zinc (Zn) and 3% or less of iron (Fe), and it should be noted that the description of the contents thereof is replaced with the above description.

In an example embodiment in the present disclosure, the plating may be performed in an aluminum-based plating bath at 600 to 680°C.

In an example embodiment in the present disclosure, the coating of the aluminum-based plating layer with the composition for surface treatment may use any one coating method selected from the group consisting of bar coating, roll coating, spraying, deposition, spray squeezing, and deposition squeezing.

In an example embodiment in the present disclosure, the composition for surface treatment coated on the aluminum-based plating layer may be the composition for surface treatment of a plated steel sheet for hot forming according to an example embodiment in the present disclosure.

In an example embodiment in the present disclosure, the composition coated on the aluminum-based plating layer may include graphite dispersed in the polymer binder resin formed of an organic resin, a lubricant, a silane coupling agent, a rust inhibitor (corrosion improver), and the like. The surface treatment coated film layer formed by surface treating the aluminum-based plating layer using the composition has excellent physical properties such as corrosion resistance and weldability and a characteristic of high emissivity.

The coating of the aluminum-based plated steel sheet with the composition described above may be performed at the deposition amount of 400 to 1800 mg/m², as an example. The surface treatment coated film layer having a thickness of 1.50 µm or less, preferably 0.30 to 1.50 µm may be obtained by performing a subsequent drying process, after applying the composition at the deposition amount as such. Herein, the thickness of the coating film layer refers to a thickness after drying. In an example embodiment in the present disclosure, when the deposition amount of the composition is less than 400 mg/m², corrosion resistance may be reduced by the composition thinly applied on a peak area having a roughness of the aluminum-based plating layer, but when the thickness of more than 1800 mg/m², the coated film layer becomes too thick after drying, and physical properties such as weldability and workability may be deteriorated.

In an example embodiment in the present disclosure, the surface treatment coated film layer may be obtained by applying the composition for surface treatment the surface of the plating layer of the aluminum-based plated steel sheet and then drying and curing the plated steel sheet. In an example embodiment in the present disclosure, the drying and curing step may be performed in a temperature range of 80 to 150°C based on a peak metal temperature which is a final reaching temperature of the plated steel sheet. During the drying, when the temperature is lower than 80°C based on PMT, the drying is incompletely performed to deteriorate the physical properties such as corrosion resistance and alkali resistance of the surface-treated plated steel sheet. However, when the drying temperature is higher than 150°C based on PMT, the organic component in the applied composition is carbonized, so that the physical properties such as corrosion resistance and heat resistance may not be secured. In addition, a problem of surface treatment layer breakage during working may occur due to an excessive increase in the hardness of the surface treatment layer.

As described above, the an example embodiment in the present disclosure plated steel sheet which is surface-treated using the composition for surface treatment of a plated steel sheet for hot forming according to an example embodiment in the present disclosure may have excellent corrosion resistance and weldability and may have a characteristic of higher emissivity than the aluminum-based plated steel sheet which is not surface-treated. This is due to the optimized type and content of components forming the composition, and in particular, due to the further inclusion of graphite in addition to the polymer binder resin and adjustment of the contents of Si and P present in the surface treatment coated film layer.

Meanwhile, in the surface treatment of the plated steel sheet with the composition for surface treatment of a plated steel sheet for hot forming according to an example embodiment in the present disclosure, it should be noted that the surface treatment may not be performed only on the aluminum-based plated steel sheet manufactured by hot-dip plating. That is, the composition for surface treatment according to an example embodiment in the present disclosure may be applied on any plated steel sheet having an aluminum-based plating layer on at least one surface of the base steel sheet.

Hereinafter, a hot-formed member according to another aspect of the present disclosure and a method for manufacturing the same will be described.

In an example embodiment in the present disclosure, the hot-formed member may be obtained by hot forming a steel sheet for hot forming, and the steel sheet for hot forming herein may be the aluminum-based plated steel sheet according to an example embodiment in the present disclosure.

The aluminum-based plated steel sheet according to an example embodiment in the present disclosure may include: a base steel sheet; and an aluminum-based plating layer on at least one surface of the base steel sheet, wherein a surface treatment coated film layer may be further included on the aluminum-based plating layer. Herein, the surface treatment coated film layer may be formed from the composition for surface treatment according to an example embodiment in the present disclosure.

A characteristic of improved emissivity may be exhibited by the presence of a constant coated film layer on the plating layer of the aluminum-based plated steel sheet according to an example embodiment in the present disclosure. As such, when the aluminum-based plated steel sheet having improved emissivity is applied to a hot forming process, excellent characteristics in terms of various physical properties may be exhibited. As an example, a heating time during high-temperature heating for hot forming may be reduced as compared with a commonly aluminum-based plated steel sheet which is not surface-treated. Besides, in terms of weldability, welding current may be secured at an equivalent level or higher, and corrosion resistance may be further improved. Furthermore, since intrusion of hydrogen may be effectively suppressed in terms of hydrogen occlusion, it is effective for preventing hydrogen-induced brittleness during an automobile manufacturing process.

Meanwhile, it should be noted that the descriptions of the base steel sheet and the aluminum-based plating layer forming the hot-formed member may be replaced with the above description.

Meanwhile, the method for manufacturing a hot-formed member according to an example embodiment in the present disclosure is not particularly limited, and as well-known in the art, the hot-formed member may be manufactured by heating a steel sheet for hot forming to a temperature at or higher than an austenitizing temperature, maintaining the temperature, and then quenching and forming at the same time.

As an example of the present disclosure, the plated steel sheet for hot forming according to an example of the present disclosure may be used to obtain a blank, and the blank may be heated to a temperature range of 900 to 970°C and then maintained for 3 to 15 minutes. After hot press forming the blank which is heated and maintained as such, cooling at a cooling rate of a critical cooling rate or more may be performed to manufacture an intended hot press-formed member. As a non-limiting example, the cooling may be performed at a cooling rate of 30°C/s or more.

However, according to an example embodiment in the present disclosure, an aluminum-based plated steel sheet having a constant coated film layer may be applied on the plating layer as a steel sheet for hot forming, and a heating time of the blank manufactured using the steel sheet during a heating process may be reduced. Therefore, an economically more favorable manufacturing method than a conventional manufacturing process for obtaining a hot-formed member may be provided.

### Mode for Invention

Hereinafter, the present disclosure will be specifically described through the following Examples. However, it should be noted that the following Examples are only for describing the present disclosure in detail by illustration, and are not intended to limit the right scope of the present disclosure. The reason is that the right scope of the present disclosure is determined by the matters described in the claims and reasonably inferred therefrom.

### (Examples)

An aluminum-based plated steel sheet having an aluminum-based plating layer including, by weight: 9% of silicon, a remainder of Al, and unavoidable impurities provided on both surfaces of a base steel sheet was prepared. Thereafter, the aluminum-based plating layer was coated with a composition for surface treatment in which graphite was dispersed by a roll coating method, and then dried and cured at 120°C based on PMT. A coated film layer of 0.40 to 1.50 µm was formed, based on the thickness of the dried coated film layer. Meanwhile, for comparison, the aluminum-based plated steel sheet which was not surface-treated was used as a comparative steel.

At this time, the composition for surface treatment was a composition in which graphite was dispersed at a weight ratio between the polymer binder resin and graphite of 1:0.25 or less, and the polymer binder resin includes 8% of an acryl resin, 0.50% of a Teflon-based wax, a silane coupling agent (at the content of Table 1), a phosphoric acid-based corrosion resistance improver (at the content of Table 1), and a remainder of a solvent (water + 10% alcohol) with respect to a total of 100 wt%. Graphite powder having an average particle size of 0.2 to 5.0 µm was added at each weight ratio to the polymer binder resin formed as such, and then stirring was performed at 450 rpm for 15 minutes or more using an agitator to obtain a composition for final surface treatment layer.

The contents and deposition amounts of Si and P in each coated film layer formed on the plating layer according to the above were measured and calculated.

At this time, the content and deposition amount of each element in the coated film layer were measured using an X-ray fluorescence analysis method and a non-destructive coating thickness measurement device (Betascope^{®}). First, the content of each element was quantitatively obtained using the X-ray fluorescence analyzer. Then, the thickness of the coated film layer was secured using the non-destructive coating thickness measurement device, the density of the coated film layer was obtained, and then the coating thickness and the coated film layer density were multiplied to calculate the deposition amount per unit area. Next, the deposition amount of each element was calculated from the content and deposition amount of each element secured above.

Further, as described above, the emissivity of the plated steel sheet for hot forming having the coated film layer formed on the plating layer was measured. At this time, the emissivity was measured in a wavelength range of 2.5 to 50.0 µm in accordance with KS L 2514 and then calculated in accordance with KS L 2525.

Meanwhile, a heating treatment of heating each plated steel sheet having the coated film layer formed on the plating layer according to the above 900°C and then maintaining for 5 minutes was performed, and then press (forming) simultaneously with cooling is performed using a mold, thereby obtaining a hot-formed member. Thereafter, the corrosion resistance, weldability, and hydrogen occlusion amount of the hot-formed member were measured. The results are shown in Table 2.

At this time, a time taken to raise the temperature to a target heating temperature was measured together. Specifically, the time taken to raise temperature was indicated as a value converted based on 100, when a time taken to raise the temperature to a target temperature of the aluminum-based plated steel sheet which was not surface treatment layer was set to 100.

In addition, the weldability was expressed as a value converted based on 100, when a maximum welding current of the aluminum-based plated steel sheet which was not surface-treated was 100 in a test performed according to the standards of ISO18278-2 (2016) and RNES-B-00010v3 (2016). The hydrogen occlusion amount was shown as a value converted based on 100, when each hot-formed member was allowed to stand in the air for one week and then the hydrogen occlusion amount of the aluminum-based plated steel sheet which was not surface-treated was set to 100. The corrosion resistance was evaluated in accordance with the standards of ISO 14993:2018.

**[Table 1]**

| Specimen No. | Composition | | | Dry coated film layer | | | | | | Emissivity | Steel type |
|---|---|---|---|---|---|---|---|---|---|---|---|
| | Silane coupling agent (wt%) | Phosphoric acid-based compound (wt%) | Solution deposition amount (mg/m²) | Thickness (µm) | Si content (wt%) | P content (wt%) | G content (wt%) | Si deposition amount (mg/m²) | P deposition amount (mg/m²) | | |
| Reference specimen | - | - | 0 | 0 | 0 | 0 | 0 | 0 | 0 | 0.7 | Reference steel |
| 1 | 0.40 | 0.82 | 531 | 0.45 | 7.84 | 0.35 | 0 | 41.63 | 1.86 | 0.80 | Comparative Steel 1 |
| 2 | 0.40 | 0.82 | 531 | 1.40 | 7.84 | 0.35 | 0 | 41.63 | 1.86 | 0.81 | Comparative Steel 2 |
| 3 | 0.43 | 0 | 577 | 0.45 | 6.48 | 0 | 10 | 37.38 | 0 | 0.82 | Comparative Steel 3 |
| 4 | 0.43 | 0 | 806 | 0.45 | 2.88 | 0 | 60 | 23.22 | 0 | 0.88 | Comparative Steel 4 |
| 5 | 0.42 | 0.42 | 577 | 0.45 | 6.77 | 0.15 | 10 | 39.04 | 0.88 | 0.83 | Inventive Steel 1 |
| 6 | 0.42 | 0.42 | 806 | 0.45 | 3.01 | 0.07 | 60 | 24.26 | 0.55 | 0.88 | Inventive Steel 2 |
| 7 | 0.40 | 0.82 | 577 | 0.45 | 7.06 | 0.32 | 10 | 40.71 | 1.82 | 0.83 | Inventive Steel 3 |
| 8 | 0.40 | 0.82 | 806 | 0.45 | 3.14 | 0.14 | 60 | 25.29 | 1.13 | 0.87 | Inventive Steel 4 |
| 9 | 0.40 | 1.18 | 577 | 0.45 | 7.34 | 0.48 | 10 | 42.37 | 2.75 | 0.85 | Inventive Steel 5 |
| 10 | 0.40 | 1.18 | 806 | 0.45 | 3.26 | 0.21 | 60 | 26.32 | 1.71 | 0.87 | Inventive Steel 6 |
| 11 | 0.39 | 1.54 | 577 | 0.45 | 7.63 | 0.64 | 10 | 44.03 | 3.69 | 0.84 | Inventive Steel 7 |
| 12 | 0.39 | 1.54 | 806 | 0.45 | 3.39 | 0.28 | 60 | 27.35 | 2.29 | 0.89 | Inventive Steel 8 |
| 13 | 0.43 | 0 | 1667 | 1.40 | 6.48 | 0 | 10 | 108.00 | 0 | 0.88 | Comparative Steel 5 |
| 14 | 0.43 | 0 | 2330 | 1.40 | 2.88 | 0 | 60 | 67.09 | 0 | 0.88 | Comparative Steel 6 |
| 15 | 0.42 | 0.42 | 1667 | 1.40 | 6.77 | 0.15 | 10 | 112.80 | 2.55 | 0.87 | Comparative Steel 7 |
| 16 | 0.42 | 0.42 | 2330 | 1.40 | 3.01 | 0.07 | 60 | 70.07 | 1.58 | 0.90 | Comparative Steel 8 |
| 17 | 0.40 | 0.82 | 1667 | 1.40 | 7.06 | 0.32 | 10 | 117.60 | 5.25 | 0.88 | Comparative Steel 9 |
| 18 | 0.40 | 0.82 | 2330 | 1.40 | 3.14 | 0.14 | 60 | 73.06 | 3.26 | 0.89 | Comparative Steel 10 |
| 19 | 0.40 | 1.18 | 1667 | 1.40 | 7.34 | 0.48 | 10 | 122.40 | 7.95 | 0.87 | Comparative Steel 11 |
| 20 | 0.40 | 1.18 | 2330 | 1.40 | 3.26 | 0.21 | 60 | 76.04 | 4.94 | 0.90 | Comparative Steel 12 |
| 21 | 0.39 | 1.54 | 1667 | 1.40 | 7.63 | 0.64 | 10 | 127.19 | 10.65 | 0.88 | Comparative Steel 13 |
| 22 | 0.39 | 1.54 | 2330 | 1.40 | 3.39 | 0.28 | 60 | 79.02 | 6.62 | 0.90 | Comparative Steel 14 |
| The G content in Table 1 refers to the content of graphite. | | | | | | | | | | | |
| In Table 1, the representative specimen and the comparative steel refer to an aluminum plated steel sheet which was not subjected to a surface treatment process. | | | | | | | | | | | |

**[Table 2]**

| Steel type | Time taken to heat to target temperature | Weldability | Hydrogen occlusion amount | Corrosion resistance | Classification |
|---|---|---|---|---|---|
| Reference steel | 100 | 100 | 100 | × | Reference example |
| Comparative Steel 1 | 91 | 95 | 90 | ○ | Comparative Example 1 |
| Comparative Steel 2 | 93 | < 90 | 90 | ○ | Comparative Example 2 |
| Comparative Steel 3 | 83 | 100 | > 140 | Δ | Comparative Example 3 |
| Comparative Steel 4 | 72 | 95 | 115 | Δ | Comparative Example 4 |
| Inventive Steel 1 | 85 | 100 | 80 | ○ | Inventive Example 1 |
| Inventive Steel 2 | 63 | 95 | 70 | ○ | Inventive Example 2 |
| Inventive Steel 3 | 81 | 100 | 70 | ○ | Inventive Example 3 |
| Inventive Steel 4 | 63 | 95 | 60 | ○ | Inventive Example 4 |
| Inventive Steel 5 | 85 | 100 | 65 | ○ | Inventive Example 5 |
| Inventive Steel 6 | 68 | 95 | 55 | ○ | Inventive Example 6 |
| Inventive Steel 7 | 84 | 90 | 60 | ○ | Inventive Example 7 |
| Inventive Steel 8 | 62 | 90 | 55 | ○ | Inventive Example 8 |
| Comparative Steel 5 | 84 | < 90 | 130 | Δ | Comparative Example 5 |
| Comparative Steel 6 | 61 | < 90 | 110 | Δ | Comparative Example 6 |
| Comparative Steel 7 | 84 | < 90 | 80 | ○ | Comparative Example 7 |
| Comparative Steel 8 | 65 | < 90 | 65 | ○ | Comparative Example 8 |
| Comparative Steel 9 | 82 | < 90 | 70 | ○ | Comparative Example 9 |
| Comparative Steel 10 | 61 | < 90 | 55 | ○ | Comparative Example 10 |
| Comparative Steel 11 | 83 | < 90 | 60 | ○ | Comparative Example 11 |
| Comparative Steel 12 | 63 | < 90 | 50 | ○ | Comparative Example 12 |
| Comparative Steel 13 | 82 | < 90 | 60 | ○ | Comparative Example 13 |
| Comparative Steel 14 | 62 | < 90 | 50 | ○ | Comparative Example 14 |

As shown in Tables 1 and 2, the aluminum plated steel sheets which were surface-treated using the composition for surface treatment according to an example embodiment in the present disclosure had all improved physical properties of weldability, hydrogen occlusion, and corrosion resistance, as compared with the plated steel sheets (reference examples) which were not surface-treated. In particular, as the content of graphite present in the coated film layer was higher, better physical properties were shown.

In addition, it was confirmed that during high-temperature heating for hot forming the surface-treated aluminum plated steel sheet, a heating time was able to be significantly reduced as compared with the reference examples. The results suggest that the efficiency of the hot forming process may be increased, and the environmental pollutants produced during the manufacture of the parts and the like by hot forming may be reduced.

Meanwhile, in Comparative Examples 1 and 2 in which graphite was not contained in the composition for surface treatment, a time taken to heat to a target temperature was somewhat decreased by forming the coated film layer, but hydrogen occlusion was inferior.

In addition, in Comparative Examples 3 to 6 containing graphite in the composition but no P, it was confirmed that hydrogen occlusion was greatly inferior, and corrosion resistance was also decreased. Among them, since Comparative Example 3 had a high Si content in the coated film layer than Comparative Example 4, it had relatively increased electrical resistance of the surface and poor weldability. The results were shown identically in Comparative Examples 5 and 6 also.

In addition, similarly, in Comparative Examples 7, 9, 11, and 13 in which all of graphite, Si, and P were all contained in the composition for surface treatment, but the Si deposition amount in the dry coated film layer was excessive, and in Comparative Examples 5, 10, 12, and 14 in which the composition deposition amount was excessive, electrical resistance of the surface was excessively produced to deteriorate weldability.

As such, the aluminum plated steel sheet surface-treated using the composition for surface treatment of a steel sheet according to an example embodiment in the present disclosure was confirmed to have improved emissivity by the coated film layer. Thus, since a heating time was able to be reduced during heating to a target temperature in the manufacturing process of the hot-formed member, it is favorable in terms of productivity and economic feasibility, and reducing environmental pollutants such as CO₂ produced in the manufacturing process of a member, and thus, an environmentally friendly product may be provided.

## Claims

1. A composition for surface treatment of a plated steel sheet for hot forming in which graphite is dispersed in a polymer binder resin,
wherein a weight ratio between the polymer binder resin and the graphite is 1:0.25 or less,
the graphite has an average particle size of 0.2 to 5.0 µm, and
the composition includes carbon (C), hydrogen (H), oxygen (O), nitrogen (N), silicon (Si), and phosphorus (P).

2. The composition for surface treatment of a plated steel sheet for hot forming of claim 1, base on 100wt% of the polymer binder resin includes: 6 to 20% of an acryl resin, 0.01 to 1.00% of a Teflon-based wax, 0.01 to 0.50% of a silane coupling agent, 0.01 to 2.00% of a phosphoric acid-based corrosion resistance improver, and a remainder of a solvent.

3. The composition for surface treatment of a plated steel sheet for hot forming of claim 2, wherein the Teflon-based wax is a polyethylene-Teflon-based wax or a polyteflon-based wax.

4. The composition for surface treatment of a plated steel sheet for hot forming of claim 2, wherein the silane coupling agent is one or more selected from the group consisting of vinyltriethoxysilane, 3-glycidoxypropyltrimethoxysilane, 3-glycidoxypropyltriethoxysilane, 3-glycidoxypropylmethyldimethoxysilane, N-2-(aminoethyl)-3-aminopropyltriethoxysilane, 3-aminopropyltrimethoxysilane, 3-aminopropyltriethoxysilane, and 2-perfluorooctylethyltrimethoxysilane.

5. The composition for surface treatment of a plated steel sheet for hot forming of claim 2,
wherein the solvent is a mixed solvent of water and an organic solvent,
the water is deionized water or distilled water, and
the organic solvent is one or more selected from alcohol, ether, and acetone.

6. A surface-treated aluminum-based plated steel sheet comprising:
a base steel sheet;
an aluminum-based plating layer formed on at least one surface of the base steel sheet; and
a surface treatment coated film layer formed on the aluminum-based plating layer,
wherein the surface treatment coated film layer is formed from the composition of any one of claims 1 to 5.

7. The surface-treated aluminum-based plated steel sheet of claim 6, wherein the surface treatment coated film layer has a Si content of 8.00 wt% or less (excluding 0%) and a Si deposition amount of 100.00 mg/m² or less.

8. The surface-treated aluminum-based plated steel sheet of claim 6, wherein the surface treatment coated film layer has a P content of 0.70 wt% or less (excluding 0%) and a P deposition amount of 10.00 mg/m² or less.

9. The surface-treated aluminum-based plated steel sheet of claim 6, wherein the surface treatment coated film layer has a graphite content of 0.1 to 60.0%.

10. The surface-treated aluminum-based plated steel sheet of claim 6, wherein the surface treatment coated film layer has a thickness of 1.50 µm or less based on a dry thickness.

11. The surface-treated aluminum-based plated steel sheet of claim 6, wherein the surface treatment coated film layer has an emissivity of 0.8 or more.

12. The surface-treated aluminum-based plated steel sheet of claim 6, wherein the base steel sheet is a carbon steel including, by weight: 0.02 to 0.60% of carbon (C), 0.001 to 2.000% of silicon (Si), 0.001 to 1.000% of aluminum (Al), 0.1 to 4.0% of manganese (Mn), 0.05% or less of phosphorus (P), 0.02% or less of sulfur (S), 0.02% or less of nitrogen (N), 0 to 0.1% of titanium (Ti), 0.0001 to 0.0100% of boron (B), 0 to 1.00% of copper (Cu), 0 to 1.00% of molybdenum (Mo), 0 to 1.00% of chromium (Cr), 0 to 1.00% of nickel (Ni), 0 to 1.00% of vanadium (V), 0 to 0.01% of calcium (Ca), 0 to 0.1% of niobium (Nb), 0 to 1.0% of tin (Sn), 0 to 1.0% of tungsten (W), 0 to 1.0% of antimony (Sb), 0 to 1.0% of magnesium (Mg), 0 to 1.0% of cobalt (Co), 0 to 1.0% of arsenic (As), 0 to 1.0% of zirconium (Zr), 0 to 1.0% of bismuth (Bi), 0 to 0.3% of rare earth elements (REM), a remainder of Fe, and unavoidable impurities.

13. The surface-treated aluminum-based plated steel sheet of claim 6, wherein the aluminum-based plating layer includes, by weight: 0 to 27% of zinc (Zn), 7.0 to 10.0% of silicon (Si), a remainder of Al, and unavoidable impurities.

14. A method for manufacturing a surface-treated aluminum-based plated steel sheet, the method comprising:
preparing an aluminum-based plated steel sheet in which an aluminum-based plating layer is formed on at least one surface of a base steel sheet;
applying a composition for surface treatment on the aluminum-based plating layer; and
applying, drying, and curing the composition to form a surface treatment coated film layer,
wherein the composition for surface treatment is the composition of any one of claims 1 to 5.

15. The method for manufacturing a surface-treated aluminum-based plated steel sheet of claim 14, wherein the coating treatment is performed by any one method selected from the group consisting of bar coating, roll coating, spraying, deposition, spray squeezing, and deposition squeezing.

16. The method for manufacturing a surface-treated aluminum-based plated steel sheet of claim 14, wherein the drying and curing are performed in a temperature range of 80 to 150°C based on a peak metal temperature (PMT) of the plated steel sheet.

17. A hot-formed member comprising a coated film layer on a plating layer of the surface-treated aluminum plated steel sheet of any one of claims 6 to 13.

18. The hot-formed member of claim 17, wherein the coated film layer is formed from the composition of any one of claims 1 to 5.
